# EUROPEAN PATENT APPLICATION

(11) **EP 4 625 438 A1**
(43) Date of publication of application: **01.10.2025**
(21) Application number: 23894396.3
(22) Date of filing: 06.11.2023
(51) Int. Cl.: G21D 3/08, G21D 3/12, G21D 5/16, G21C 7/32

(54) **NUCLEAR POWER PLANT, AND POWER GENERATION METHOD FOR NUCLEAR POWER PLANT**

(30) Priority: 21.11.2022 JP 2022185568
(71) Applicant: HITACHI-GE NUCLEAR ENERGY, LTD., Hitachi-shi Ibaraki 317-0073 (JP)
(72) Inventor: KATAGIRI, Yukinori, Tokyo 100-8280 (JP); IKEDA, Haruhiko, Hitachi-shi, Ibaraki 317-0073 (JP); MURAKAMI, Yohei, Tokyo 100-8280 (JP)
(74) Representative: MERH-IP Matias Erny Reichl Hoffmann Patentanwälte PartG mbB
(86) International application number: PCT/JP2023/039801
(87) International publication number: WO 2024/111384

(57) **Abstract**

A nuclear power plant including a nuclear reactor includes an output control unit 70 that controls opening of an extraction valve 13 according to a load request and an energy storage portion that stores renewable energy. The output control unit 70 controls a temperature of feedwater to the nuclear reactor based on the opening of the extraction valve 13 and the amount of energy stored in the energy storage portion. Accordingly, a nuclear power plant and a power generation method in the nuclear power plant capable of improving load following capability of the nuclear power plant and further stabilizing nuclear reactor output is provided.

## Description

### Technical Field

The present invention relates to a nuclear power plant and a power generation method in the nuclear power plant.

### Background Art

As an example of a technique for improving load following capability of a nuclear power generation plant, PTL 1 discloses an output control device. The output control device is used for a nuclear power generation plant including a turbine driven by steam generated in a nuclear reactor, a generator driven by the turbine to generate power, an extraction valve configured to adjust a flow rate of extraction steam flowing out of the turbine, and an exhaust valve installed in an exhaust system of the turbine. The output control device includes a signal processing unit that controls opening of the extraction valve and the exhaust valve based on an output target value of the nuclear power generation plant and an actual output value of the generator, and a reactor output setting unit that sets reactor output of the nuclear reactor. When increasing a load of the turbine, the signal processing unit temporarily increases a load increase amount of the turbine by reducing the opening of the extraction valve and the exhaust valve, and the reactor output setting unit performs control to increase the reactor output while the load increase amount is temporarily increased.

### Citation List

### Patent Literature

PTL 1: JP2022-129412A

### Summary of Invention

### Technical Problem

As a means for reducing the emissions of carbon dioxide, which is one of substances causing global warming, introduction of a power generation system (renewable energy power generation) using renewable energy represented by solar light, solar heat, and wind power has been promoted.

Although renewable energy power generation has a low conversion efficiency into power and a small output scale, it is expected to be used as a main power supply source in the future since the output can be increased by electrically connecting a large number of systems or virtually connecting a large number of systems on a power system.

Further, nuclear power generation using uranium as a main fuel is also effective as a means for reducing the emissions of carbon dioxide. In nuclear power generation, steam is generated by heat generated by a nuclear fission reaction of uranium, and the steam is used to drive a turbine, thereby obtaining power. The nuclear power generation has an advantage in the magnitude of the output scale, and is expected to be responsible for power supply as well as renewable energy power generation.

In the effort of carbon neutral for restricting the progress of global warming, stable power supply is required in which the above-described renewable energy power generation and nuclear power generation are used as power supply sources and these power generation systems are coordinated.

However, in the renewable energy power generation, the power generation output varies depending on weather, climate, and daytime and nighttime. Therefore, it is necessary to restrict the fluctuation in power supply amount due to the output change of the nuclear power described above or charging and discharging of a storage battery.

In order to solve such a problem, for example, PTL 1 discloses that output in nuclear power generation is increased by throttling the extraction valve.

However, it has been found that, when the extraction valve is throttled as in PTL 1, the temperature of feedwater in a feedwater system to the nuclear reactor such as a drain tank decreases, and there is room for stabilization and improvement in nuclear reactor output.

The invention provides a nuclear power plant and a power generation method in the nuclear power plant capable of improving load following capability of the nuclear power plant and further stabilizing nuclear reactor output.

### Solution to Problem

The invention includes a plurality of means for solving the above problems, and an example thereof is a nuclear power plant including a nuclear reactor, the nuclear power plant including an output control unit configured to control opening of an extraction valve according to a load request and an energy storage portion configured to store renewable energy. The output control unit controls a temperature of feedwater to the nuclear reactor based on the opening of the extraction valve and an amount of energy stored in the energy storage portion.

### Advantageous Effects of Invention

According to the invention, the load following capability of the nuclear power generation plant can be improved, and the nuclear reactor output can be further stabilized. Problems, configurations, and effects other than those described above will be clarified by the following description of embodiments.

### Brief Description of Drawings

[FIG. 1] FIG. 1 is a schematic configuration diagram of a nuclear power plant according to a first embodiment of the invention.
[FIG. 2] FIG. 2 is a schematic configuration diagram of a nuclear power plant control system according to the first embodiment.
[FIG. 3] FIG. 3 is a graph illustrating plant load operation by the nuclear power plant and the control system according to the first embodiment.
[FIG. 4] FIG. 4 is a schematic configuration diagram of a nuclear power plant according to a second embodiment of the invention.
[FIG. 5] FIG. 5 is a schematic configuration diagram of a nuclear power plant according to a third embodiment of the invention.
[FIG. 6] FIG. 6 is a schematic configuration diagram of a nuclear power plant according to a fourth embodiment of the invention.
[FIG. 7] FIG. 7 is a schematic configuration diagram of a nuclear power plant according to a fifth embodiment of the invention.

### Description of Embodiments

Hereinafter, embodiments of a nuclear power plant and a power generation method in the nuclear power plant according to the invention will be described with reference to the drawings. In the drawings used in the present specification, the same or corresponding components are denoted by the same or similar reference signs, and a repeated description of these components may be omitted.

### <First Embodiment>

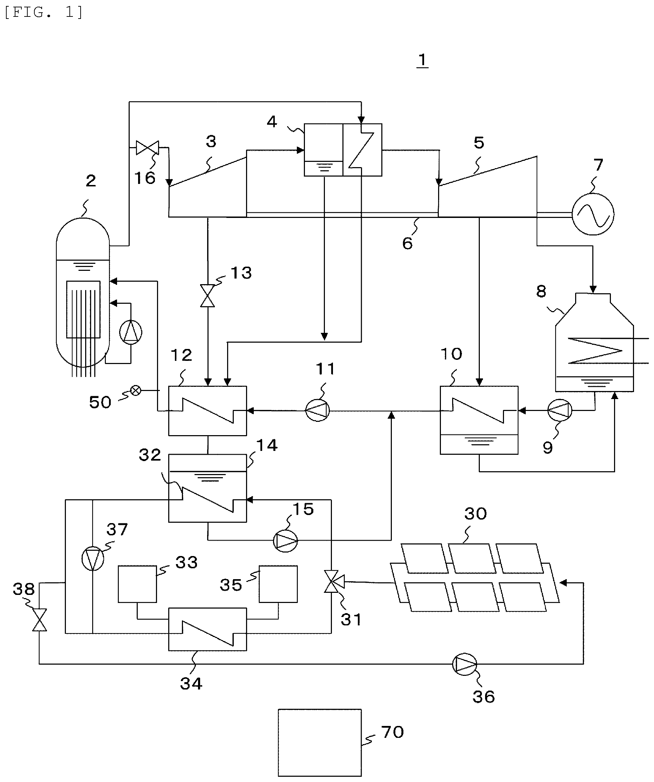

A nuclear power plant and a power generation method in the nuclear power plant according to a first embodiment of the invention will be described with reference to FIGS. 1 to 3.

First, an overall configuration of the nuclear power plant will be described with reference to FIG. 1. FIG. 1 is a diagram illustrating a schematic configuration of the nuclear power plant according to the embodiment.

A nuclear power plant 1 illustrated in FIG. 1 includes a nuclear reactor 2, a high-pressure steam turbine 3, a moisture separator reheater 4, a low-pressure steam turbine 5, a drive shaft 6, a generator 7, a condenser 8, a condensate pump 9, a low-pressure feedwater heater 10, a feedwater pump 11, a high-pressure feedwater heater 12, an extraction valve 13, a drain tank 14, a drain pump 15, a turbine governor 16, a solar heat collector 30, a three-way valve 31, a drain heating unit 32, a high-temperature tank 33, a heat storage tank 34, a low-temperature tank 35, a heat medium supply pump 36, a heat medium circulation pump 37, an adjustment valve 38, an output control unit 70, and the like.

Among these, the nuclear reactor 2, the high-pressure steam turbine 3, the moisture separator reheater 4, the low-pressure steam turbine 5, the drive shaft 6, the generator 7, the condenser 8, the condensate pump 9, the low-pressure feedwater heater 10, the feedwater pump 11, the high-pressure feedwater heater 12, the extraction valve 13, the drain tank 14, the drain pump 15, and the turbine governor 16 are preferably the execution subject of a nuclear power generation step in which steam is generated by using heat generated in the nuclear reactor 2 and a turbine generator is rotationally driven to generate power.

The high-pressure steam turbine 3, the moisture separator reheater 4, the low-pressure steam turbine 5, the drive shaft 6, and the generator 7 constitute the turbine generator.

Further, the solar heat collector 30, the three-way valve 31, the drain heating unit 32, the high-temperature tank 33, the heat storage tank 34, the low-temperature tank 35, the heat medium supply pump 36, the heat medium circulation pump 37, and the adjustment valve 38 constitute an energy storage portion that stores solar energy that is a type of renewable energy, and preferably, the energy storage portion is the execution subject of an energy storage step of storing renewable energy.

Hereinafter, a specific example of each configuration will be described.

The nuclear reactor 2 in FIG. 1 represents a boiling water reactor as an example, and the nuclear reactor is not limited to the boiling water reactor. The boiling water reactor includes a pressure vessel loaded with a fuel assembly (fuel rods) therein and filled with cooling water to a certain water level. A control rod for controlling nuclear fission of the fuel assembly is loaded in the nuclear reactor, and the rate of nuclear fission is determined by a position of the control rod. When the control rod is pulled out, a nuclear fission reaction proceeds, the cooling water in the nuclear reactor 2 boils by generated heat, and steam is obtained from an upper portion of the nuclear reactor 2.

The steam generated in the nuclear reactor 2 passes through the turbine governor 16 and then drives the high-pressure steam turbine 3. Exhaust steam of the high-pressure steam turbine 3 is reheated by a part of the steam from the nuclear reactor 2 in the moisture separator reheater 4 to drive the low-pressure steam turbine 5. Driving forces of the high-pressure steam turbine 3 and the low-pressure steam turbine 5 rotate the generator 7 via the drive shaft 6 to obtain power.

The steam after driving the low-pressure steam turbine 5 is condensed by the condenser 8 and is supplied to the low-pressure feedwater heater 10 by the condensate pump 9. In the low-pressure feedwater heater 10, feedwater is heated using extraction steam extracted from an intermediate stage of the low-pressure steam turbine 5. The feedwater is pressurized by the feedwater pump 11 and supplied to the high-pressure feedwater heater 12. In the high-pressure feedwater heater 12, the feedwater is heated using extraction steam extracted from an intermediate stage of the high-pressure steam turbine 3. The heated feedwater is reintroduced into the nuclear reactor 2.

The steam, which is extracted from the low-pressure steam turbine 5 and heats the feedwater in the low-pressure feedwater heater 10, is stored as drain at a bottom portion of the low-pressure feedwater heater 10 and then returned to the condenser 8. The steam, which is extracted from the high-pressure steam turbine 3 and heats the feedwater in the high-pressure feedwater heater 12, is stored as drain in the drain tank 14 installed below the high-pressure feedwater heater 12, and then pressurized by the drain pump 15 and returned to an inlet of the feedwater pump 11.

As a means for utilizing renewable energy in the nuclear power plant 1 described above, in the embodiment, feedwater of the drain tank 14 is heated according to a situation by using the heat storage tank 34 that stores thermal energy collected by the solar heat collector 30 that collects thermal energy of the sun.

Here, the solar heat collector 30 is a device that collects thermal energy from the sun and heats a heat medium flowing therein. The solar heat collector 30 may be of a trough type, a Fresnel type, or the like, and may include a mechanism for correcting an angle of its heat collector body according to a solar altitude to increase the amount of collected heat. Although water is assumed as the heat medium in the embodiment, another liquid having a high heat capacity can be used, and the heat medium is not particularly limited.

In the embodiment, the solar heat collector 30 is operated in four operation modes of "heat storage operation", "heat release operation", "direct heating operation", and "idle operation" under the control of the output control unit 70. Hereinafter, each operation will be described.

In the "heat storage operation", the heat medium heated by the solar heat collector 30 is supplied to the heat storage tank 34 via the three-way valve 31. The heat storage tank 34 is filled with a second heat medium, and the second heat medium is heated using the heat of the heat medium. The second heat medium is supplied from the low-temperature tank 35. The second heat medium heated in the heat storage tank 34 is stored in the high-temperature tank **33.** Further, the heat medium after heating the second heat medium is returned from the heat storage tank 34 to the heat medium supply pump 36 via the adjustment valve **38.** The heat medium circulation pump 37 is stopped, and there is no flow of the heat medium in the drain heating unit **32.**

In the "heat release operation", thermal energy of the second heat medium stored in the high-temperature tank 33 is used to heat the drain stored in the drain tank **14.** The heat medium circulation pump 37 is started, and the heat medium in the heat storage tank 34 is heated using the second heat medium stored in the high-temperature tank 33. The second heat medium after heating the heat medium is transferred to and stored in the low-temperature tank 35. The heat medium heated in the heat storage tank 34 is supplied to the drain heating unit 32 at a lower portion of the drain tank 14 via the three-way valve 31 to heat the drain in the drain tank 14. The heat medium after heating is returned to the heat medium circulation pump 37. The heat medium supply pump 36 is stopped, and there is no flow of the heat medium in the solar heat collector 30.

In the "direct heating operation", the heat medium heated by the solar heat collector 30 is directly used for heating in the drain tank 14. The heat medium supply pump 36 is started, and the heat medium heated by the solar heat collector 30 is supplied to the drain heating unit 32 at the lower portion of the drain tank 14 via the three-way valve 31 to heat the drain in the drain tank 14. The heat medium after heating is returned to the heat medium supply pump 36 via the adjustment valve 38. The heat medium circulation pump 37 is stopped, and there is no flow of the heat medium in the heat storage tank 34.

In the "idle operation", the heat medium is circulated through a path of the heat medium supply pump 36, the solar heat collector 30, the three-way valve 31, the heat storage tank 34, and the adjustment valve 38 in a state where the heat medium circulation pump 37 is stopped while the heat of the second heat medium stored in the high-temperature tank 33 is maintained, thereby preventing freezing of the heat medium.

Next, a method of output control by a nuclear power plant using renewable energy in the embodiment will be described also with reference to FIG. **1****.**

In the embodiment, the nuclear reactor 2 is operated at constant output regardless of a power demand and output of the renewable energy, and the operation of a feedwater and condensate system and the solar heat collector 30 is switched according to the power demand and the output and storage amount of the renewable energy.

For example, when the power demand is high and the output of the renewable energy is high, that is, in operation during daytime in summer or the like, the nuclear reactor 2 is operated at constant output, and an extraction throttle operation of throttling the extraction valve 13 provided at the high-pressure steam turbine 3 is performed. The extraction throttle operation is an operation in which the amount of fluid passing through an inside of the turbine is increased by throttling (reducing the amount of) steam extracted from the intermediate stage of the turbine, and turbine output and thus power generation output are increased. Electric output from the generator 7 is increased by the extraction throttle operation, and thus it is possible to cope with the power demand.

On the other hand, since the amount of steam extracted to the high-pressure feedwater heater 12 is reduced by throttling the extraction valve 13, a temperature of feedwater at an outlet of the high-pressure feedwater heater 12 decreases. The decrease in the temperature of the feedwater can be measured using a feedwater thermometer 50. The decrease in the temperature of the feedwater causes a change in reaction state in a reactor core of the nuclear reactor 2, and may cause an unexpected fluctuation in output of the nuclear reactor.

In the embodiment, such load control in which the extraction valve 13 is throttled is performed in the "direct heating operation" in which the drain in the drain tank 14 is heated using the thermal energy collected by the solar heat collector 30, and the heated drain is returned to the feedwater to heat the feedwater. That is, the heat from the solar heat collector 30 is directly used for heating in the drain tank 14. The drain stored in the drain tank 14 is returned to the inlet of the feedwater pump 11 via the drain pump 15. By returning the heated drain to the feedwater, the decrease in the temperature of the feedwater in the high-pressure feedwater heater 12 is restricted, and the influence on the nuclear reactor 2 is restricted.

Next, when the power demand is low and the output of the renewable energy is high, that is, in operation during daytime in spring or autumn or the like, the nuclear reactor 2 is operated at constant output to meet the power demand. The solar heat collector 30 is operated in the "heat storage operation", and the thermal energy of the heat medium heated by the solar heat collector 30 is stored in the high-temperature tank 33 via the heat storage tank 34. That is, the drain is not heated.

Next, when the power demand is high and the output of the renewable energy is low, that is, in operation during daytime in winter or nighttime in summer, the nuclear reactor 2 is operated at constant output, and the extraction throttle operation of throttling the extraction valve 13 is performed to meet the power demand. By throttling the extraction valve 13, the amount of steam extracted to the high-pressure feedwater heater 12 is reduced, and the temperature of the feedwater in the high-pressure feedwater heater 12 also decreases.

Therefore, in the embodiment, the load control in which the extraction valve 13 is throttled is performed in the "heat release operation" in which the drain in the drain tank 14 is heated using the thermal energy collected by the solar heat collector 30 and the heated drain is returned to the feedwater to heat the feedwater, and the heat accumulated in the high-temperature tank 33 is supplied to the drain tank 14 via the heat storage tank 34 to heat the drain. By returning heated drain water to the feedwater, the decrease in the temperature of the feedwater in the high-pressure feedwater heater 12 is restricted, and the influence on the nuclear reactor 2 is restricted.

Finally, when the power demand is low and the output of the renewable energy is also low, that is, in operation during nighttime in spring or autumn, nighttime in winter, or the like, the "idle operation" is performed, and the nuclear reactor 2 is operated at constant output to meet the power demand. The heat medium is circulated through the path of the heat medium supply pump 36, the solar heat collector 30, the three-way valve 31, the heat storage tank 34, and the adjustment valve 38 in a state where the heat medium circulation pump 37 is stopped and the heat in the high-temperature tank 33 is maintained, thereby preventing freezing of the heat medium.

Here, when the heat storage amount (determined from the temperature of the heat medium and the amount of the heat medium in the high-temperature tank) of the second heat medium stored in the high-temperature tank during the "heat release operation" or the "direct heating operation" is equal to or less than a specified value, the operation of the solar heat collector 30 is stopped.

Although the operation exemplified above has been described in association with representative power demand and renewable energy output by season and daytime and nighttime, in actual operation, the operation is switched by hour, and the operation is not limited to the above season and time zone. For example, the solar heat collector 30 is operated in the "heat release operation" in a case where the power demand is high and the output of the renewable energy is low at the time of severe weather such as typhoon even in the daytime in summer.

The "specified value" serving as a criterion for determining the switching for the "power demand and the output of the renewable energy" is a value that depends on the output of the plant, output of configured renewable energy, a power consumer configuration, and the like, and is a value that is appropriately determined according to the configuration.

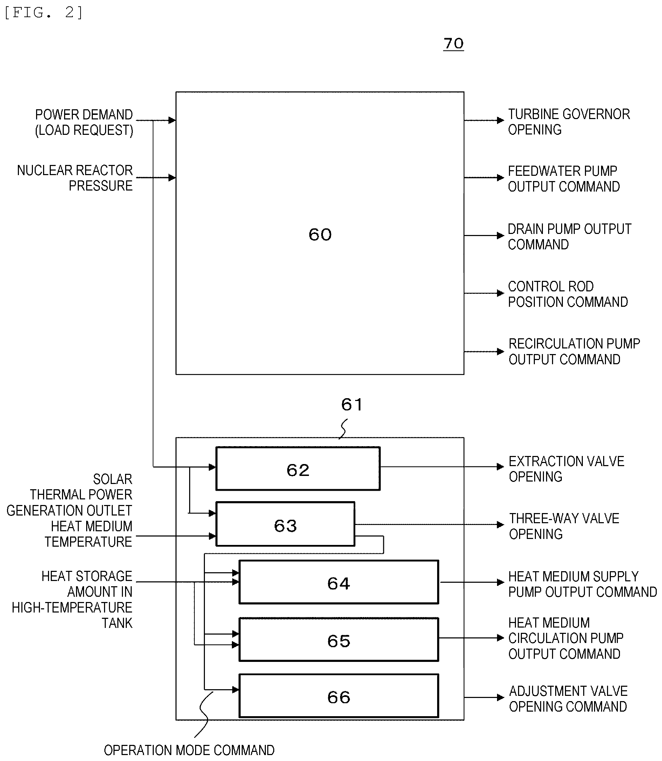

Next, details about a control system and a control method in the output control unit 70 of the nuclear power plant 1 according to the invention will be described with reference to FIG. 2. FIG. 2 is a block diagram illustrating a control system necessary for controlling the nuclear power plant 1 using the extraction valve and the solar heat collector 30.

The output control unit 70 is a part that collects data from various sensors provided in the nuclear power plant 1, executes arithmetic operations, and outputs data to monitor a state of the nuclear power plant 1.

A configuration of the output control unit 70 is illustrated in FIG. 2. The output control unit 70 includes a nuclear power plant control device 60 and a solar heat collector control device 61. The solar heat collector control device 61 includes an output control unit 62, an operation determination unit 63, a heat storage and heating control unit 64, a heat release control unit 65, and an adjustment valve control unit 66. The output control unit 70 is the execution subject of an output control step of controlling the opening of the extraction valve according to a load request.

The output control unit 70 may be implemented as hardware by a dedicated circuit board, or may be implemented by software executed by a computer. When implemented by hardware, the output control unit 70 can be implemented by integrating a plurality of arithmetic units, which execute processing, on a wiring board or in a semiconductor chip or package. When implemented by software, the output control unit 70 can be implemented by mounting a high-speed general-purpose CPU on a computer and executing a program for executing desired arithmetic processing.

As the nuclear power plant control device 60, a device that has already been put into practical use as a control device for a general boiling water type nuclear power plant can be used as it is. Measured values of the power demand and a nuclear reactor pressure are received, and turbine governor opening, an output command for the feedwater pump, an output command for the drain pump, a command for the control rod position, an output command for a recirculation pump, and the like are sent. The nuclear power plant control device 60 is used for starting and stopping the nuclear power plant 1, implementing base load operation, and the like.

On the other hand, the solar heat collector control device 61 is used to control the plant in the extraction throttle operation, the "heat release operation", the "heat storage operation", the "direct heating operation", and the "idle operation" in the invention. The output control unit 62 receives the power demand (load request) and sends the opening of the extraction valve 13.

In addition, the operation determination unit 63 is a unit that determines, based on the load request and the heat storage amount in the solar heat collector 30, switching among heating of the drain by the thermal energy stored in the solar heat collector 30, storage of the thermal energy collected by the solar heat collector 30, heating of the drain by the thermal energy collected by the solar heat collector 30, and an idle state, receives the power demand and an outlet heat medium temperature in solar thermal power generation, and outputs any of the three types of operations as an operation mode command. The opening command for the three-way valve 31 according to each operation mode is sent.

The heat storage and heating control unit 64 receives the operation mode command and the heat storage amount in the high-temperature tank 33, and sends an output command for the heat medium supply pump 36. When the heat storage amount in the high-temperature tank 33 exceeds a specified range, the heat storage is stopped.

The heat release control unit 65 also receives the operation mode command and the heat storage amount in the high-temperature tank 33, and sends an output command for the heat medium circulation pump 37. When the heat storage amount in the high-temperature tank 33 falls below the specified range, the heat release is stopped. The adjustment valve control unit 66 sends an opening command for the adjustment valve 38 according to each operation mode.

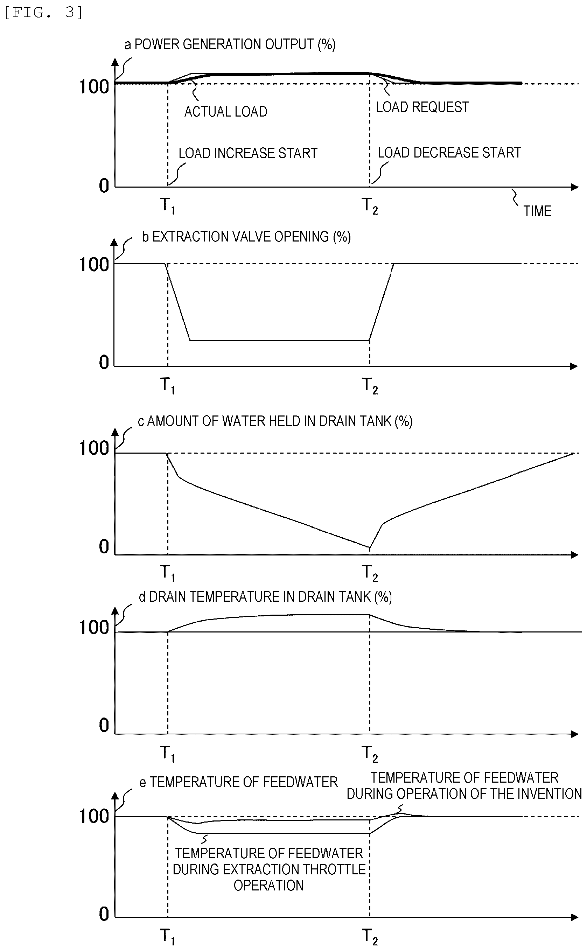

Next, operation characteristics of the nuclear power plant presented when the solar heat collector 30 performs the "heat release operation" or "direct heating operation" will be described with reference to FIG. 3. FIG. 3 is a time series graph illustrating operation characteristics of each part in the plant when the extraction throttle operation is performed according to an increase or decrease in power demand, that is, when the nuclear power plant is subjected to load operation.

Horizontal axes in FIG. 3 represent time, and load increase is performed at a time-point T1 and load decrease is performed at a time-point T2. Further, vertical axes a to e represent operation characteristics of corresponding parts in the plant, and a rated operation state is normalized to 100% and illustrated.

In FIG. 3, the axis a represents the power generation output, and the load request and an actual load are illustrated. When the load request increases at the time-point T1, the actual load indicated by the axis a is increased by reducing the opening of the extraction valve indicated by the axis b. Since the amount of steam extracted from the high-pressure steam turbine 3 is reduced by the extraction throttle operation, the amount of water held in the drain tank 14 indicated by the axis c decreases. On the other hand, as a result of heating the drain using the heat medium, a drain temperature in the drain tank 14 indicated by the axis d rises. By returning the drain to the inlet of the feedwater pump 11, it can achieve a characteristic where the temperature of the feedwater indicated by the axis e decreases temporarily and then recovers to a rated temperature.

The temperature of the feedwater during the extraction throttle operation is also shown on the axis e. As a result of restricting a decrease in the temperature of the feedwater during the extraction throttle operation by the invention, the amount of heat of the feedwater supplied to the nuclear reactor 2 can be maintained at the rated operation state, and thus the change in the reaction state in the reactor core can be restricted.

The effect of increasing the power generation output by the extraction throttle operation depends on the amount of extraction from the turbine stage, and is estimated to be approximately 3% to 5% of rated power generation output. When the output of the nuclear power plant 1 is assumed to be about 1 GW, the extent of increase in the output is estimated to be 30 MW to 50 MW. The increase is equivalent to the output of one or two small and medium-sized coal-fired power plant or petroleum-fired power plant. Such thermal power generation functions as an adjustment force for compensating for output fluctuation in renewable energy and stably maintaining supply and demand balance, but in a case where thermal power generation is eliminated in realizing carbon neutral, the nuclear power plant according to the invention can be used as a substitute for thermal power generation.

As described above, the solar heat collector control device 61 according to the invention can be added to a control device of a nuclear power plant that is already operating, and the existing nuclear power plant can be easily adapted for the load operation compatible with renewable energy as in the invention by simple construction such as addition of the extraction valve 13 and addition of the drain heating unit to the lower portion of the drain tank 14. In addition, since the decrease in the temperature of the feedwater occurring during the extraction throttle operation is compensated for by the drain heating, it is not necessary to change the operation method of the nuclear reactor 2, and the hurdle for application to existing facilities can be made very low. The invention is not limited to the application to the existing plant, and can be applied to a new plant.

Next, effects of the embodiment will be described.

The nuclear power plant 1 including the nuclear reactor and the turbine generator according to the first embodiment of the invention described above includes the output control unit 70 that controls the opening of the extraction valve 13 according to the load request and the energy storage portion that stores the renewable energy. The output control unit 70 controls the temperature of feedwater to the nuclear reactor based on the opening of the extraction valve 13 and the amount of energy stored in the energy storage portion.

The extraction throttle operation is adopted in which the amount of steam extracted from the steam turbine is reduced to increase the amount of steam passing through the inside of the steam turbine, and the turbine output is increased. This operation enables the load operation in the nuclear power plant as well, and the fluctuation in renewable energy power generation due to weather, climate, and daytime and nighttime can be reduced by the load operation of the nuclear power plant. Although the temperature of the feedwater decreases as a result of a decrease in the extracted steam flowing into the feedwater heater due to the extraction throttle operation, the feedwater can be maintained at a set temperature by storing the renewable energy and returning the renewable energy to the plant as heat as necessary. Therefore, it is possible to reduce the fluctuation in thermal energy due to weather, climate, and daytime and nighttime and to stably use the thermal energy as heat.

That is, although the decrease in the temperature of the feedwater causes a change in the operation state of the nuclear reactor and causes fluctuation such as a decrease in void fraction in the nuclear reactor or an increase in the thermal output associated therewith, according to the invention, the temperature of the feedwater can be maintained high, the fluctuation in the operation state of the nuclear reactor 2 can be restricted as compared with the related art, and more stable and safe plant operation can be performed. Therefore, it is possible to maintain the balance of power supply and demand and maintain the power quality of a power system by incorporating renewable energy power generation, which is an asynchronous power supply, as a part of the plant and performing load operation of the nuclear power plant while utilizing the renewable energy for achieving carbon neutral.

The energy storage portion includes the solar heat collector 30 that collects the thermal energy of the sun and the heat storage tank 34 that stores the thermal energy collected by the solar heat collector 30. A feedwater heating unit heats the feedwater by heating the drain in the drain tank 14 using the thermal energy collected by the solar heat collector 30 and returning the heated drain to the feedwater at the time of load control in which the extraction valve 13 is throttled, so that the feedwater temperature of the nuclear reactor 2 that varies with the operation of the plant can be easily controlled by adjusting the drain flow rate in the drain tank 14.

Furthermore, since the operation determination unit 63 is provided that determines, based on the load request and the heat storage amount in the solar heat collector 30, switching among heating of the drain by the thermal energy stored by the solar heat collector 30, storage of the thermal energy collected by the solar heat collector 30, and heating of the drain by the thermal energy collected by the solar heat collector 30, it is possible to automatically determine an appropriate operation condition.

In addition, the output control unit 70 can implement more appropriate operation by changing the use and storage of the renewable energy in the energy storage portion according to the power demand and the output of the renewable energy.

### <Second Embodiment>

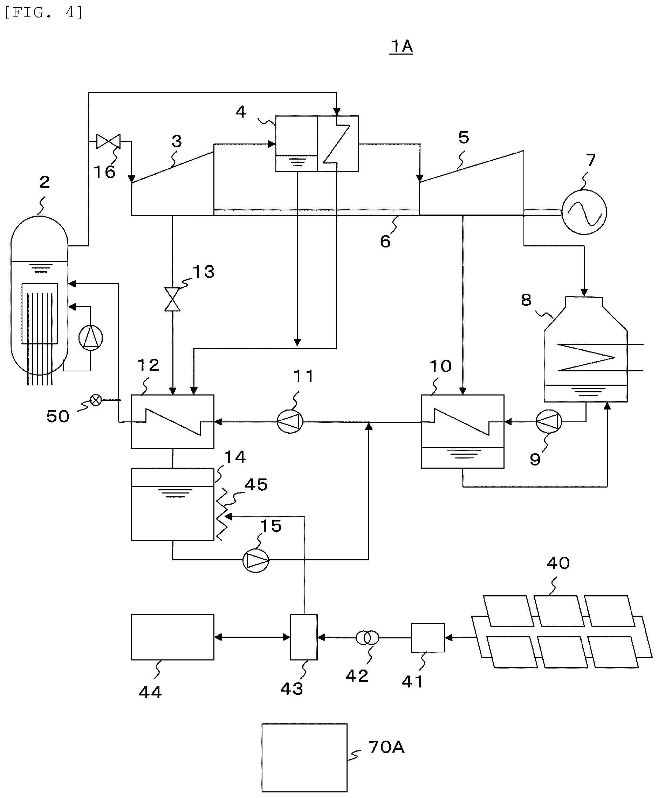

A nuclear power plant and a power generation method in the nuclear power plant according to a second embodiment of the invention will be described with reference to FIG. 4. FIG. 4 is a diagram illustrating a schematic configuration of the nuclear power plant in the embodiment.

A nuclear power plant 1A according to the embodiment illustrated in FIG. 4 is different from the nuclear power plant 1 illustrated in FIG. 1 in that an energy storage portion thereof includes a solar power generation panel 40 that obtains power from solar energy and a storage battery 44 that stores the power obtained by the solar power generation panel 40. Further, during load control in which the extraction valve 13 is throttled, the power obtained by the storage battery 44 is converted into thermal energy to heat drain in the drain tank 14, and the heated drain is returned to feedwater to heat the feedwater.

An electric heater 45 is a resistor that generates heat when a current is passed therethrough, and heats and keeps the drain tank 14 warm using power. The power from the solar power generation panel 40 is supplied to the electric heater 45 via an inverter 41, a circuit breaker 42, and a distribution board 43. In the embodiment, the storage battery 44 is provided as a means for storing power, and the power obtained by the solar power generation panel 40 is stored in the storage battery 44.

Although an example in which power from the solar power generation panel 40 is supplied to the electric heater 45 has been described here, a configuration in which power from a wind power generator is stored in addition to the solar power generation panel 40 can be adopted. In this case, the solar power generation panel 40 and the wind power generator are not alternatively employed, and both can be employed at the same time.

In the embodiment, the solar power generation can be operated in three types of modes of "power storage operation", "heating operation", and "direct heating operation".

In the "power storage operation", the power obtained by the solar power generation panel 40 is supplied to the storage battery 44 via the distribution board 43.

In the "heating operation", the power stored in the storage battery 44 is supplied to the electric heater 45 via the distribution board 43 to heat the drain in the drain tank 14.

In the "direct heating operation", the power obtained by the solar power generation panel 40 is supplied to the electric heater 45 via the distribution board 43 to heat the drain in the drain tank 14.

Other configurations and operations are substantially the same as those of the nuclear power plant and the power generation method in the nuclear power plant of the first embodiment described above, and details thereof will be omitted.

Also with the nuclear power plant and the power generation method in the nuclear power plant of the second embodiment of the invention, substantially the same effects as those of the nuclear power plant and the power generation method in the nuclear power plant of the first embodiment described above can be obtained. That is, by storing solar energy from the sun or wind energy as power in the storage battery 44 and heating plant feedwater during extraction throttle operation, it is possible to reduce the fluctuation in thermal energy due to weather, climate, and daytime and nighttime and to stably subject the nuclear power plant to load operation. Further, similarly to the first embodiment, by incorporating renewable energy power generation, which is an asynchronous power supply, as a part of the plant, it is possible to contribute to both maintaining the balance of power supply and demand and maintaining the power quality of the power system.

### <Third Embodiment>

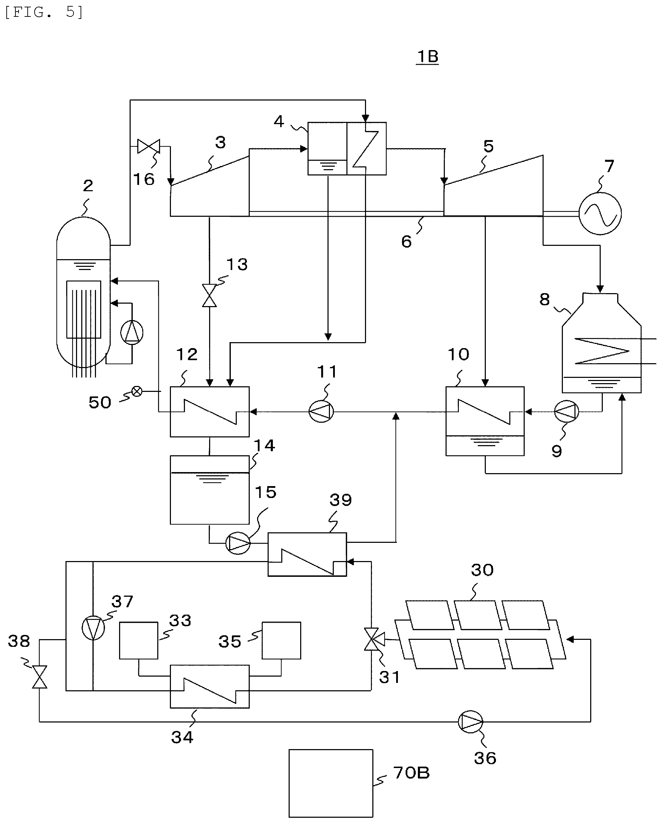

A nuclear power plant and a power generation method in the nuclear power plant according to a third embodiment of the invention will be described with reference to FIG. 5. FIG. 5 is a diagram illustrating a schematic configuration of the nuclear power plant in the embodiment.

A nuclear power plant 1B according to the embodiment illustrated in FIG. 5 is different from the nuclear power plant 1 illustrated in FIG. 1 in that a heat exchanger 39 is provided as a heating method for drain, and during load control in which the extraction valve 13 is throttled, thermal energy obtained by the solar heat collector 30 (a heat medium from the high-temperature tank 33 or a heat medium heated by the solar heat collector 30) is supplied to the heat exchanger 39 to heat the drain at an outlet of the drain pump 15, and the heated drain is returned to feedwater to heat the feedwater.

Similarly to the first embodiment, in the embodiment, the solar heat collector 30 is operated in four types of "heat storage operation", "heat release operation", "direct heating operation", and "idle operation". In the "heat storage operation", a heat medium heated by the solar heat collector 30 is supplied to the heat storage tank 34 via the three-way valve 31 to heat a second heat medium filled in the heat storage tank 34. The heated second heat medium is stored in the high-temperature tank 33. In the "heat release operation", the heated second heat medium stored in the high-temperature tank 33 is supplied to the heat storage tank 34 to heat the heat medium, and the heat medium is supplied to the heat exchanger 39 to heat the drain at the outlet of the drain pump 15. In the "direct heating operation", the heat medium heated by the solar heat collector 30 is supplied to the heat exchanger 39 to heat the drain at the outlet of the drain pump 15. The "idle operation" is not particularly different.

Other configurations and operations are substantially the same as those of the nuclear power plant and the power generation method in the nuclear power plant of the first embodiment described above, and details thereof will be omitted.

Also with the nuclear power plant and the power generation method in the nuclear power plant of the third embodiment of the invention, substantially the same effects as those of the nuclear power plant and the power generation method in the nuclear power plant of the first embodiment described above can be obtained.

The third embodiment is not limited to a mode in which the drain at the outlet of the drain pump 15 is heated by supplying a heat source to the heat exchanger 39, and may be a mode in which the drain at the outlet of the drain pump 15 is heated by a heating wire with power obtained by the solar power generation panel 40 or a wind power generator as in the second embodiment.

### <Fourth Embodiment>

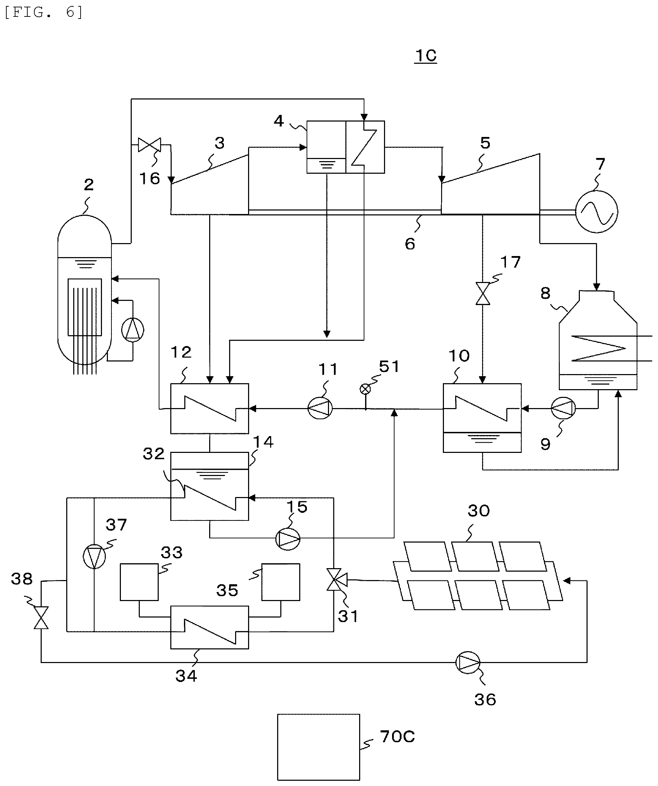

A nuclear power plant and a power generation method in the nuclear power plant according to a fourth embodiment of the invention will be described with reference to FIG. 6. FIG. 6 is a diagram illustrating a schematic configuration of the nuclear power plant in the embodiment.

A nuclear power plant 1C according to the embodiment illustrated in FIG. 6 is different from the nuclear power plant 1 illustrated in FIG. 1 in that the extraction valve 13 is not provided to the high-pressure steam turbine 3 and extraction throttle operation is performed using an extraction valve 17 provided to the low-pressure steam turbine 5. The extraction throttle operation increases electric output from the generator 7 to meet the power demand.

In the nuclear power plant 1C according to the embodiment, by throttling the extraction valve 17, the amount of steam extracted to the low-pressure feedwater heater 10 decreases, and a temperature of feedwater at an outlet of the low-pressure feedwater heater 10 also decreases. The decrease in the temperature of the feedwater can be measured using a low-pressure feedwater thermometer 51.

Similarly to the first embodiment, in the embodiment, the solar heat collector 30 is operated in four types of "heat storage operation", "heat release operation", "direct heating operation", and "idle operation". Among the four types, the "idle operation" is not particularly different.

Similarly to the first embodiment, in the "heat storage operation", a heat medium heated by the solar heat collector 30 is supplied to the heat storage tank 34 via the three-way valve 31 to heat a second heat medium, thereby storing thermal energy in the high-temperature tank 33.

In the "heat release operation", the heated second heat medium stored in the high-temperature tank 33 is supplied to the heat storage tank 34 to heat a heat medium flowing in the heat storage tank 34. Further, drain stored in the drain tank 14 is heated using the heat medium. By supplying the heated drain to an inlet of the feedwater pump 11, the temperature of the feedwater at the outlet of the low-pressure feedwater heater 10, which is lowered due to the extraction throttle operation, is increased.

In the "direct heating operation", the drain tank 14 is directly heated by the heat medium heated by the solar heat collector 30. By supplying the heated drain to the inlet of the feedwater pump 11, the temperature of the feedwater at the outlet of the low-pressure feedwater heater 10, which is lowered due to the extraction throttle operation, is increased.

Other configurations and operations are substantially the same as those of the nuclear power plant and the power generation method in the nuclear power plant of the first embodiment described above, and details thereof will be omitted.

Also with the nuclear power plant and the power generation method in the nuclear power plant of the fourth embodiment of the invention, substantially the same effects as those of the nuclear power plant and the power generation method in the nuclear power plant of the first embodiment described above can be obtained.

The fourth embodiment can also adopt a mode in which the drain in the drain tank 14 is heated by a heating wire with power obtained by the solar power generation panel 40 or a wind power generator as in the second embodiment.

### <Fifth Embodiment>

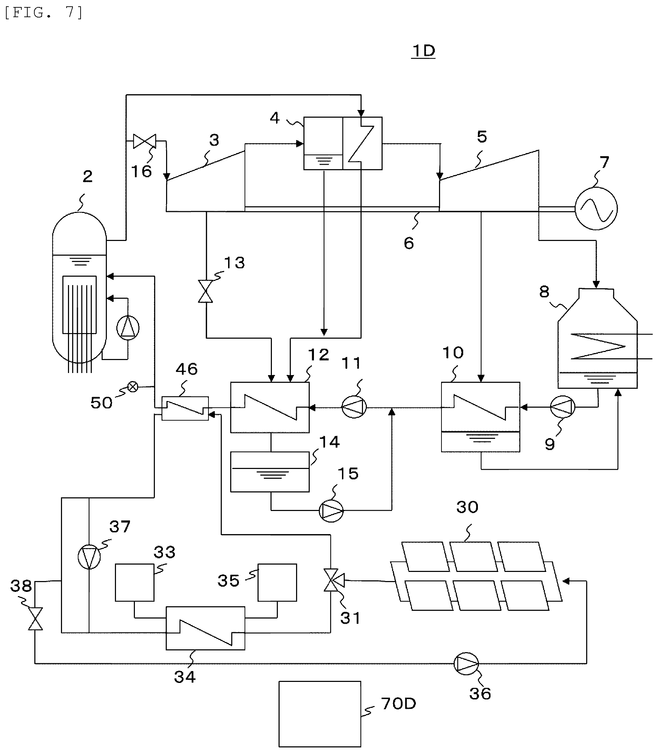

A nuclear power plant and a power generation method in the nuclear power plant according to a fifth embodiment of the invention will be described with reference to FIG. 7. FIG. 7 is a diagram illustrating a schematic configuration of the nuclear power plant in the embodiment.

A nuclear power plant 1D according to the embodiment illustrated in FIG. 7 is different from the nuclear power plant 1 illustrated in FIG. 1 in that a heat exchanger 46 is provided at an outlet of the high-pressure feedwater heater 12 and feedwater is heated at the outlet of the high-pressure feedwater heater 12 using thermal energy obtained by the solar heat collector 30.

In the embodiment, since the extraction valve 13 is throttled during extraction throttle operation, the amount of steam extracted to the high-pressure feedwater heater 12 decreases and a temperature of feedwater decreases. The decrease in the temperature of the feedwater can be measured using the feedwater thermometer 50. Therefore, the feedwater is heated using the heat medium heated by the solar heat collector 30 or the heat medium heated by the heat stored in the high-temperature tank 33 to compensate for the decrease in the temperature of the feedwater. Similarly to the first embodiment, in the embodiment, the solar heat collector 30 is operated in four types of "heat storage operation", "heat release operation", "direct heating operation", and "idle operation".

Similarly to the first embodiment, in the "heat storage operation", the heat medium heated by the solar heat collector 30 is supplied to the heat storage tank 34 via the three-way valve 31, and a second heat medium is heated, thereby storing thermal energy in the high-temperature tank 33.

In the "heat release operation", the temperature of feedwater at the outlet of the high-pressure feedwater heater 12, which is lowered due to the extraction throttle operation, is increased using the thermal energy stored in the high-temperature tank 33.

In the "direct heating operation", the feedwater is directly heated using the heat medium heated by the solar heat collector 30.

Other configurations and operations are substantially the same as those of the nuclear power plant and the power generation method in the nuclear power plant of the first embodiment described above, and details thereof will be omitted.

Also with the nuclear power plant and the power generation method in the nuclear power plant of the fifth embodiment of the invention, substantially the same effects as those of the nuclear power plant and the power generation method in the nuclear power plant of the first embodiment described above can be obtained.

The fifth embodiment is not limited to the mode in which the feedwater is heated at the outlet of the high-pressure feedwater heater 12 by supplying the feedwater to the heat exchanger 46, and may be a mode in which the feedwater is heated at the outlet of the high-pressure feedwater heater 12 by a heating wire with power obtained by the solar power generation panel 40 or a wind power generator as in the second embodiment.

### <Others>

The invention is not limited to the above-described embodiments, and includes various modifications. The above embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. A part of a configuration in each embodiment may also be added to, deleted from, or replaced with another configuration.

### Reference Signs List

1, 1A, 1B, 1C, 1D: nuclear power plant
2: nuclear reactor
3: high-pressure steam turbine
4: moisture separator reheater
5: low-pressure steam turbine
6: drive shaft
7: generator
8: condenser
9: condensate pump
10: low-pressure feedwater heater
11: feedwater pump
12: high-pressure feedwater heater
13, 17: extraction valve
14: drain tank
15: drain pump
16: turbine governor
30: solar heat collector
31: three-way valve
32: drain heating unit
33: high-temperature tank
34: heat storage tank
35: low-temperature tank
36: heat medium supply pump
37: heat medium circulation pump
38: adjustment valve
39, 46: heat exchanger
40: solar power generation panel
41: inverter
42: circuit breaker
43: distribution board
44: storage battery
45: electric heater
50: feedwater thermometer
51: low-pressure feedwater thermometer
60: nuclear power plant control device
61: solar heat collector control device
62: output control unit
63: operation determination unit
64: heat storage and heating control unit
65: heat release control unit
66: adjustment valve control unit
70, 70A, 70B, 70C, 70D: output control unit

## Claims

1. A nuclear power plant including a nuclear reactor, the nuclear power plant comprising:
an output control unit configured to control opening of an extraction valve according to a load request; and
an energy storage portion configured to store renewable energy, wherein
the output control unit controls a temperature of feedwater to the nuclear reactor based on the opening of the extraction valve and an amount of energy stored in the energy storage portion.

2. The nuclear power plant according to claim 1, wherein
the energy storage portion includes a heat collector that collects thermal energy of the sun and a heat storage tank that stores the thermal energy collected by the heat collector, and
during load control in which the extraction valve is throttled, the output control unit heats drain in a drain tank using the thermal energy collected by the heat collector and returns the drain to the feedwater.

3. The nuclear power plant according to claim 2, wherein
the output control unit determines, based on a load request and a heat storage amount in the heat collector, switching among heating of the drain by the thermal energy stored in the heat collector, storage of the thermal energy collected by the heat collector, and heating of the drain by the thermal energy collected by the heat collector.

4. The nuclear power plant according to claim 1, wherein
the energy storage portion includes a solar power generation panel that obtains power from solar energy and a storage battery that stores the power obtained by the solar power generation panel, and
during load control in which the extraction valve is throttled, the output control unit converts power obtained by the storage battery into thermal energy to heat drain in a drain tank and returns the heated drain to the feedwater.

5. The nuclear power plant according to claim 1, wherein
the energy storage portion includes a heat collector that collects thermal energy of the sun and a heat storage tank that stores the thermal energy collected by the heat collector, and
during load control in which the extraction valve is throttled, the output control unit heats drain at an outlet of a drain pump using the thermal energy obtained by the heat collector and returns the heated drain to the feedwater.

6. The nuclear power plant according to claim 1, wherein
the energy storage portion includes a heat collector that collects thermal energy of the sun and a heat storage tank that stores the thermal energy collected by the heat collector, and
the output control unit heats the feedwater at an outlet of a feedwater heater using the thermal energy obtained by the heat collector.

7. The nuclear power plant according to claim 1, wherein
the output control unit stores the renewable energy in the energy storage portion when a power demand is lower than a specified value and output of the renewable energy is equal to or greater than a specified value.

8. The nuclear power plant according to claim 1, wherein
the output control unit heats the feedwater using the renewable energy in the energy storage portion when a power demand is equal to or greater than a specified value and output of the renewable energy is lower than a specified value.

9. The nuclear power plant according to claim 1, wherein
the output control unit heats the feedwater using the renewable energy in the energy storage portion when a power demand and output of the renewable energy are equal to or greater than specified values.

10. The nuclear power plant according to claim 1, wherein
the output control unit maintains the renewable energy in the energy storage portion when a power demand and output of the renewable energy are lower than specified values.

11. A power generation method in a nuclear power plant including a nuclear reactor, the method comprising:
a nuclear power generation step of generating steam using heat generated in the nuclear reactor and rotationally driving a turbine generator to generate power;
an energy storage step of storing renewable energy; and
an output control step of controlling opening of an extraction valve according to a load request, wherein
in the output control step, a temperature of feedwater to the nuclear reactor is controlled based on the opening of the extraction valve and an amount of energy stored in the energy storage step.
